# EUROPÄISCHE PATENTSCHRIFT

(11) **EP 1 918 662 B1**
(45) Veröffentlichungstag und Bekanntmachung des Hinweises auf die Patenterteilung: **08.08.2018**
(21) Anmeldenummer: 07020952.3
(22) Anmeldetag: 25.10.2007
(51) Int. Cl.: F25B 21/00

(54) **Kühl- und/oder Gefriergerät**
Refrigeration and/or freezer device
Appareil de réfrigération et/ou de refroidissement

(30) Priorität: 30.10.2006 DE 202006016624 U; 18.05.2007 DE 202007007101 U
(43) Veröffentlichungstag der Anmeldung: 07.05.2008
(73) Patentinhaber: Liebherr-Hausgeräte Ochsenhausen GmbH, 88416 Ochsenhausen (DE)
(72) Erfinder: Jendrusch, Holger, 88416 Ochsenhausen (DE); Blersch, Dietmar, 88521 Ertingen (DE); Schmid, Eugen, 88400 Mettenberg (DE); Gindele, Thomas, 88299 Leutkirch (DE); Wiest, Matthias, 88416 Hattenburg (DE); Siegel, Didier, 88416 Steinhausen (DE)
(74) Vertreter: Herrmann, Uwe

(56) Entgegenhaltungen:
- EP-A- 1 156 287
- EP-A- 1 586 837
- WO-A-2004/059221
- WO-A1-2005/043052
- GB-A- 1 591 693
- JP-A- 2 217 773
- JP-A- S59 183 264
- US-A- 4 513 581
- US-A1- 2003 140 638
- US-A1- 2005 047 284
- US-A1- 2006 130 513
- US-B1- 6 370 908
- US-B1- 6 595 004

## Beschreibung

Die Erfindung betrifft ein Kühl- und/oder Gefriergerät mit wenigstens einem Raum zur Aufnahme von Kühl- und/oder Gefriergut sowie mit wenigstens einem Kälteaggregat, das einen oder mehrere magnetische Kühler umfasst.

Außer durch den Einsatz herkömmlicher Kühlkreisläufe bestehend aus Kompressor, Verflüssiger, Drossel und Verdampfer ist es bekannt, die Kühlung mittels der sogenannten magnetischen Kühlung zu bewirken. Dabei wird eine Metalllegierung im Wechsel magnetisiert und entmagnetisiert, wobei sich die Metalllegierung derart verhält, dass es bei der Magnetisierung aufgrund des sogenannten magnetokalorischen Effektes zu einer Temperaturerhöhung und bei der Entmagnetisierung bzw. bei einer Entfernung des Magnetfeldes zu einer Temperaturemiedrigung der Metalllegierung kommt. Kälteaggregate mit magnetischem Kühler weisen üblicherweise einen sogenannten warmen Wärmetauscher auf, der zur Kühlung des Wärmeträgermediums dient, sowie einen kalten Wärmetauscher auf, der zur Kühlung des Geräteinnenraums durch Wärmeeintrag in das Wärmeträgermedium dient.

Ein Kälteaggregat mit magnetischem Kühler wird beispielsweise derart betrieben, dass das Wärmeträgermedium einen feststehenden Wärmetauscher bestehend aus magnetokalorischem Material durch- bzw. umströmt, wobei die Magnetisierung und Entmagnetisierung des Wärmetausches z. B. durch einen oder mehrere Magnete vorgenommen wird, die um den Wärmetauscher rotieren.

Das in dem Wärmetauscher erwärmte Wärmeträgermedium gelangt in den genannten warmen Wärmetauscher, in dem es Wärme abgibt.

Das in dem Wärmetauscher abgekühlte Wärmeträgermedium gelangt in den genannten kalten Wärmetauscher, in dem es Wärme aus dem zu kühlenden Raum aufnimmt.

Der kalte Wärmetauscher ist vorzugsweise im Geräteinnenraum, d.h. beispielsweise im Kühlfach, Kaltlagerfach oder Gefrierfach oder in einem Kühlluftkanal angeordnet und dient wie ausgeführt zur Kühlung des entsprechenden Kompartimentes.

Unter dem Begriff "magnetischer Kühler" wird im Rahmen der vorliegenden Erfindung beispielsweise eine Einheit oder Baugruppe verstanden, in der ein Magnetfeld wenigstens zeitweise auf die Metalllegierung einwirkt und in der des Weiteren ein Magnetfeld wenigstens zeitweise von der Metalllegierung wieder entfernt wird bzw. eine Entmagnetisierung der Metalllegierung stattfindet. Von der Erfindung sind beliebige Varianten eines magnetischen Kühlers umfasst. Denkbar ist es beispielsweise, den oder die Magnete ortsfest oder beweglich und den Wärmetauscher aus magnetokalorischen Material bewegbar oder ortsfest auszuführen oder in dem Wärmeträgermedium in Form einer Suspension Partikel des magnetokalorischen Materials vorzulegen.

Ein Problem vorbekannter, nach dem Prinzip der magnetischen Kühlung arbeitender Kälteaggregate besteht darin, dass die Dauer der Abtauphase des kalten Wärmetauschers vergleichsweise groß ist. Während der Abtauphase kann der kalte Wärmetauscher keine Kühlleistung erbringen. Dies führt dazu, dass Temperaturschwankungen im Gerät einen erheblichen Umfang annehmen können. Denkbar ist, dass im unteren Bereich des Kühlgerätes die Lufttemperatur den Gefrierpunkt unterschreitet.

JP S59 183264A offenbart einen Kühlschrank mit zwei kalten Wärmetauschern. US 2003/140638 A1 offenbart ein Kühlsystem mit zwei Kühlelementen. WO 2005/043052 A1 betrifft eine Vorrichtung zur Erzeugung eines Wärmestromes von magnetokalorischem Werkstoff.

Der vorliegenden Erfindung liegt daher die Aufgabe zugrunde, ein Kühl- und/oder Gefriergerät der eingangs genannten Art dahingehend weiterzubilden, dass Temperaturschwankungen auf ein möglichst geringes Niveau reduziert werden.

Diese Aufgabe wird durch ein Kühl- und/oder Gefriergerät mit den Merkmalen des Anspruchs 1 gelöst. Danach ist vorgesehen, dass das Kälteaggregat wenigstens zwei kalte Wärmetauscher umfasst. Erfindungsgemäß sind also zwei oder mehr kalte Wärmetauscher vorgesehen. Dadurch ist es möglich, im Gerät eine kontinuierliche Kühlung zu erreichen, indem stets einer der kalten Wärmetauscher in Betrieb ist. Somit ist vorgesehen, dass die kalten Wärmetauscher nie alle zeitgleich abgetaut werden. Die Erfindung ist nicht auf den Einsatz von zwei kalten Wärmetauschern beschränkt, d.h. auch der Einsatz von mehr als zwei kalten Wärmetauschern ist möglich. Gemäß der Erfindung ist vorgesehen, dass die kalten Wärmetauscher parallel angeordnet sind. Ferner ist vorgesehen, dass in Strömungsrichtung des Wärmeträgermediums stromaufwärts oder stromabwärts dieser Wärmetauscher ein oder mehrere Ventile angeordnet sind. Ferner ist eine Steuereinheit vorgesehen, die derart ausgeführt ist, dass sie das oder die Ventile derart ansteuert, dass stets wenigstens einer der Wärmetauscher von dem Wärmeträgermedium durchströmt wird und somit den Geräteinnenraum kühlt. Dadurch wird der oben genannte Vorteil erzielt, dass eine kontinuierliche Kühlung im Kühlgerät erfolgt, was den Vorteil mit sich bringt, dass Temperaturschwankungen im Kühl- bzw. Gefrierraum minimiert werden.

Der aus dem Stand der Technik bekannte Nachteil von unter Umständen erheblichen Temperaturschwankungen kann somit vermieden werden. Die Steuereinheit kann derart ausgeführt sein, dass sie das oder die Ventile derart ansteuert, dass die Anzahl der von dem Wärmeträgermedium durchströmten kalten Wärmetauschern von Betriebsparametern abhängt. Ein solcher Betriebsparameter kann beispielsweise die erforderliche Kühlleistung sein. Denkbar ist somit, dass in einem Betriebsmodus einer der kalten Wärmetauscher und in einem anderen Betriebsmodus beide bzw. mehrere oder alle der kalten Wärmetauscher von dem Wärmeträgermedium durchströmt werden. Werden mehrere kalte Wärmetauscher von dem Wärmeträgermedium durchströmt bzw. gekühlt, ergibt sich der Vorteil, dass insbesondere bei höheren Umgebungstemperaturen mehr Kühlleistung zur Verfügung steht.

Bei dem genannten Ventil kann es sich um ein bistabiles oder auch um ein tristabiles Ventil handeln, wobei das bistabile Ventil dafür sorgt, dass stets einer der kalten Wärmetauscher von dem Wärmeträgermedium durchströmt wird und wobei das tristabile Ventil in einer Schaltstellung dafür sorgt, dass beide kalten Wärmetauscher von dem Wärmeträgermedium durchströmt werden.

Wie ausgeführt, kann außer der Parallelschaltung von zwei kalten Wärmetauschern selbstverständlich auch vorgesehen sein, dass mehr als zwei kalte Wärmetauscher vorgesehen sind und/oder dass eine Kombination aus parallel und in Reihe geschalteten kalten Wärmetauschern vorgesehen ist.

Gemäß einer weiteren Ausgestaltung der Erfindung ist vorgesehen, dass der magnetische Kühler Bereiche oder Einheiten aufweist, in denen dessen Magnetisierung stattfindet, und Bereiche oder Einheiten, in denen dessen Entmagnetisierung bzw. die Entfernung des Magnetfeldes erfolgt. Ferner kann eine Steuereinheit vorgesehen sein bzw. der magnetische Kühler kann derart ausgeführt sein, dass eine periodische Umschaltung derart erfolgt, dass beide Bereiche oder Einheiten zwischen einem Zustand der Magnetisierung und einem Zustand der Entmagnetisierung bzw. Entfernung des Magnetfeldes umgeschaltet werden. Denkbar ist es beispielsweise, einen oder mehrere relativ zu dem Wärmetauscher des magnetischen Kühlers bewegbare, beispielsweise rotierende Magneten oder periodisch ein- und ausgeschaltete Magneten einzusetzen. Denkbar ist es ferner, den Wärmetauscher relativ zu einem der mehreren Magneten zu bewegen. Auch ist es möglich, eine Suspension einzusetzen, die aus dem Wärmeträgermedium besteht, in dem Partikel aus magnetokalorischem Material suspendiert sind.

Die Einheit bzw. der Bereich, in dem eine Magnetisierung stattfindet, dient dazu, das aus dem bzw. den kalten Wärmetauschern ausströmende Wärmeträgermedium zu erwärmen. Das auf diese Weise erwärmte Wärmeträgermedium wird vorzugsweise sodann in dem warmen Wärmetauscher abgekühlt.

Der Bereich bzw. die Einheit, in der das Magnetfeld entfernt wird bzw. in dem eine Entmagnetisierung stattfindet, dient dazu, das dem oder den kalten Wärmetauschern zugeführte Wärmeträgermedium abzukühlen, damit dieses in den kalten Wärmetauschern Wärme aufnehmen kann und dabei den Geräteinnenraum entsprechend kühlt.

Zur Gewährleistung dieser Funktionalität können Ventile vorgesehen sein, wobei beispielsweise in Strömungsrichtung stromabwärts des oder der warmen Wärmetauscher ein erstes Ventil angeordnet ist. Es kann eine Steuereinheit vorgesehen sein, die im Takt der Umschaltung des magnetischen Kühlers das erste Ventil derart ansteuert, dass das Wärmeträgermedium zu dem/der einen oder zu dem/der anderen der Bereiche oder Einheiten des magnetischen Kühlers geführt wird.

Dementsprechend kann weiter vorgesehen sein, dass in Strömungsrichtung stromabwärts der kalten Wärmetauscher ein zweites Ventil angeordnet ist, wobei die Steuereinheit derart ausgeführt ist, dass sie im Takt der Umschaltung des magnetischen Kühlers das zweite Ventil derart ansteuert, dass das Wärmeträgermedium zu dem/der einen oder zu dem/der anderen Bereich oder Einheit des magnetischen Kühlers geführt wird. Gemäß der Erfindung ist eine Steuereinheit vorgesehen, die das Kälteaggregat derart schaltet, dass einer der kalten Wärmetauscher zum Zwecke seiner Abtauung für eine Zeitspanne nicht von dem Wärmeträgermedium durchströmt wird. Die Zeitspanne kann konstant, d.h. fest vorgegeben oder durch den Nutzer einstellbar sein. Denkbar ist ebenfalls, dass die Zeitspanne von Betriebsparametern abhängt, wozu z.B. die Außentemperatur, die gewählte oder gemessene Temperatur des Geräteinnenraums, die Betriebsdauer und dergleichen zählen können.

Wie oben ausgeführt, kann eine Steuereinheit vorgesehen sein, die derart ausgeführt ist, dass sie in Abhängigkeit der erforderlichen Kühlleistung die Anzahl der kalten Wärmetauscher festlegt, die von dem Wärmeträgermedium durchströmt werden. Denkbar ist beispielsweise, dass in Abhängigkeit der Außentemperatur und/oder in Abhängigkeit des Sollwertes der Temperatur des Geräteinnenraums die Anzahl der kalten Wärmetauscher, die zur Kühlung beitragen, verringert oder vergrößert wird.

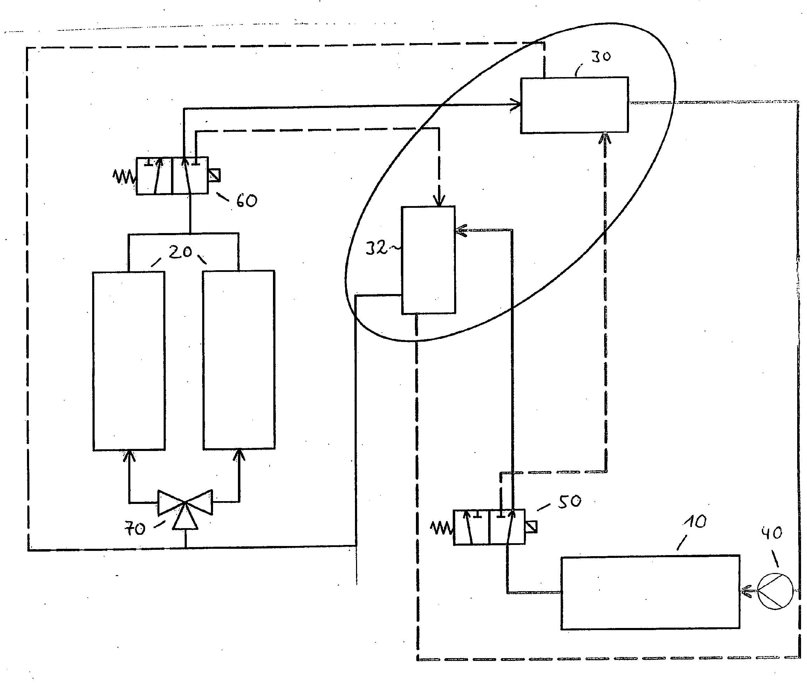

Weitere Einzelheiten und Vorteile der Erfindung werden anhand eines in der Zeichnung dargestellten Ausführungsbeispiels erläutert.

Die einzige Figur zeigt eine schematische Darstellung eines Kälteaggregats eines Kühl- bzw. Gefriergerätes nach einem Ausführungsbeispiel der Erfindung.

Mit dem Bezugszeichen 10 ist ein warmer Wärmetauscher dargestellt, der von Wärmeträgermedium durchströmt wird. Die Durchströmung des Kälteaggregates wird durch die Pumpe 40 gewährleistet, die stromaufwärts des warmen Wärmetauschers 10 angeordnet ist. Selbstverständlich ist auch eine andere Anordnung der Pumpe, z.B. stromabwärts des warmen Wärmetauschers 10 möglich.

Der warme Wärmetauscher 10 wird durch ein geeignetes Kühlmedium bzw. durch einen geeigneten Wärmeträger abgekühlt und dient dazu, aus dem Wärmeträgermedium Wärme abzuführen.

Stromabwärts des warmen Wärmetauschers 10 befindet sich das Ventil 50, das in zwei unterschiedliche Schaltstellungen geschaltet werden kann.

Stromabwärts des Ventils 50 befindet sich der magnetische Kühler in Form der Bereiche oder Einheiten 30, 32.

Im Kühlraum des Gerätes sind zwei kalte Wärmetauscher 20 angeordnet, die zur Kühlung des Kühl- bzw. Gefrierraumes des erfindungsgemäßen Gerätes dienen.

Stromabwärts dieser Wärmetauscher 20 befindet sich das Ventil 60, das in zwei unterschiedliche Schaltstellungen verschaltet werden kann. Stromaufwärts der beiden kalten Wärmetauschern 20 befindet sich das bi- oder tristabile Ventil 70. Denkbar ist ferner, das Ventil 70 stromabwärts der beiden kalten Wärmetauscher 20, beispielsweise zwischen den Wärmetauschern 20 und dem Ventil 60, anzuordnen.

Die Funktionsweise der in der Figur dargestellten Anordnung ist wie folgt.

Je nach Schaltstellung der Ventile 50, 60 durchströmt das Wärmeträgermedium entweder den Strömungsweg gemäß der durchgezogenen Linien oder den gemäß der gestrichelten Linien.

Im Fall des durch die durchgezogenen Linien dargestellten Strömungsweges durchströmt das Wärmeträgermedium zunächst den warmen Wärmetauscher 10 und sodann über das Ventil 50 die Einheit 32 des magnetischen Kühlers. In diesem erfolgt eine Entmagnetisierung und somit eine Abkühlung des magnetischen Kühlers, woraufhin das Wärmeträgermedium abgekühlt wird. Das auf diese Weise abgekühlte Wärmeträgermedium strömt sodann über das Ventil 70 in einen oder beide kalte Wärmetauscher 20. Es nimmt hier Wärme aus dem Kühl- bzw. Gefrierraum auf.

Anschließend durchströmt das Wärmeträgermedium das Ventil 60 und die Einheit 30 des magnetischen Kühlers. In der Einheit 30 findet eine Magnetisierung des magnetokalorischen Materials des magnetischen Kühlers statt, wobei sich dessen Temperatur erhöht. Das auf diese Weise aufgewärmte Wärmeträgermedium gelangt sodann zur Pumpe 40 und wird mittels der Pumpe 40 in den warmen Wärmetauscher 10 gefördert, womit der Kreislauf geschlossen ist.

Die Ventile 50, 60 werden periodisch umgeschaltet. Dabei ergibt sich abwechselnd der durch die durchgezogenen Linien dargestellte Strömungsweg und der durch die gestrichelten Linien dargestellte Strömungsweg des Wärmeträgermediums.

Im Falle des durch die gestrichelten Linien dargestellten Strömungsweges ist das Ventil 50 derart geschaltet, dass es sich in seiner (nicht dargestellten) rechten Schaltstellung befindet, so dass der Ausgang des warmen Wärmetauschers 10 mit dem Bereich oder der Einheit 30 des magnetischen Kühlers verbunden wird. Dort findet in dieser Schaltperiode eine Entmagnetisierung der Metalllegierung des Wärmetauschers des magnetischen Kühlers statt, wobei dieser abgekühlt wird. Gemäß der gestrichelten Linie ausgehend von dem Bereich oder der Einheit 30 des magnetischen Kühlers strömt in das kalte Wärmeträgermedium sodann über das bi- oder tristabile Ventil 70 in den oder die kalten Wärmetauscher 20. Von dort aus gelangt es über das Ventil 60, das in diesem Fall ebenfalls in seine (nicht dargestellte) rechte Schaltstellung geschaltet ist, in den Bereich 32 des magnetischen Kühlers. In diesem wird die Metalllegierung des Wärmetauschers des magnetischer Kühlers magnetisiert und erfährt somit eine Temperaturerhöhung. Über die Pumpe 40 gelangt das auf diese Weise erwärmte Wärmeträgermedium sodann in den warmen Wärmetauscher 10.

Erfindungsgemäß ist vorgesehen, dass nicht nur ein, sondern zwei oder mehr als zwei kalte Wärmetauscher 20 zur Kühlung des Geräteinnenraums angeordnet sind. Dies ermöglicht es, eine kontinuierliche Kühlung im Kühlgerät vorzunehmen, wodurch Temperaturschwankungen minimiert werden. Gemäß der Erfindung besteht somit die Möglichkeit, dass stets einer der kalten Wärmetauscher oder auch beide Wärmetauscher in Betrieb sind, d. h. zur Kühlung beitragen.

Da gemäß dem bevorzugten Ausführungsbeispiel immer entweder der erste oder der zweite kalte Wärmetauscher 10 in Betrieb ist, sind die Temperaturschwankungen im Gerät minimal. Außerdem ist der Energieverbrauch des Systems vorteilhafter als bei vorbekannten Kälteaggregaten, die nach dem Prinzip der magnetischen Kühlung arbeiten.

Das Abtauen eines der kalten Wärmetauscher 20 erfolgt dadurch, dass dieser über eine bestimmte Zeitdauer hinweg nicht von dem Wärmeträgermedium durchströmt wird.

## Patentansprüche

1. Kühl- und/oder Gefriergerät mit einem oder mehreren Räumen zur Aufnahme von Kühl- und/oder Gefriergut sowie mit wenigstens einem Kälteaggregat, das einen oder mehrere magnetische Kühler umfasst, wobei das Kälteaggregat wenigstens zwei kalte Wärmetauscher (20) zur Kühlung des oder der Räume aufweist, **dadurch gekennzeichnet, dass** wenigstens zwei der kalten Wärmetauscher (20) parallel in einem Kreislauf angeordnet sind, dass in Strömungsrichtung des Wärmeträgermediums stromaufwärts oder stromabwärts der wenigstens zwei kalten Wärmetauscher (20) ein Ventil (70) angeordnet ist und dass eine Steuereinheit vorgesehen ist, die das Ventil (70) derart ansteuert, dass stets wenigstens einer der kalten Wärmetauscher (20) von dem abgekühlten Wärmeträgermedium durchströmt wird, und dass eine Steuereinheit vorgesehen ist, die das Kälteaggregat derart schaltet, dass einer der kalten Wärmetauscher (20) zum Zwecke seiner Abtauung für eine Zeitspanne nicht von dem Wärmeträgermedium durchströmt wird.

2. Kühl- und/oder Gefriergerät nach Anspruch 1, **dadurch gekennzeichnet, dass** wenigstens zwei der kalten Wärmetauscher (20) parallel angeordnet sind, dass in Strömungsrichtung des Wärmeträgermediums stromaufwärts oder stromabwärts der wenigstens zwei kalten Wärmetauscher (20) ein oder mehrere Ventile (70) angeordnet sind und dass eine Steuereinheit vorgesehen ist, die das oder die Ventile (70) derart ansteuert, dass die Anzahl der kalten Wärmetauscher (20), die von dem Wärmeträgermedium durchströmt werden, von einem oder mehreren Betriebsparametern abhängt.

3. Kühl- und/oder Gefriergerät nach einem der vorhergehenden Ansprüche, **dadurch gekennzeichnet, dass** wenigstens zwei der kalten Wärmetauscher (20) in Reihe angeordnet sind, dass Bypassleitungen vorgesehen sind, die jeweils über Ventile (50, 60) zuschaltbar oder absperrbar sind und die jeweils einen oder mehrere der kalten Wärmetauscher umgehen, und dass eine Steuereinheit vorgesehen ist, die die Ventile (50, 60) derart ansteuert, dass stets wenigstens einer der Wärmetauscher (20) von dem Wärmeträgermedium durchströmt wird.

4. Kühl- und/oder Gefriergerät nach einem der vorhergehenden Ansprüche, **dadurch gekennzeichnet, dass** wenigstens zwei der kalten Wärmetauscher (20) in Reihe angeordnet sind, dass Bypassleitungen vorgesehen sind, die jeweils über Ventile (50, 60) zuschaltbar oder absperrbar sind und die jeweils einen oder mehrere der kalten Wärmetauscher (20) umgehen, und dass eine Steuereinheit vorgesehen ist, die die Ventile (50, 60) derart ansteuert, dass die Anzahl der kalten Wärmetauscher (20), die von dem Wärmeträgermedium durchströmt werden, von einem oder mehreren Betriebsparametern abhängt.

5. Kühl- und/oder Gefriergerät nach einem der vorhergehenden Ansprüche, **dadurch gekennzeichnet, dass** in Strömungsrichtung stromabwärts der kalten Wärmetauscher (20) ein zweites Ventil (60) angeordnet ist und dass eine Steuereinheit vorgesehen ist, die im Takt der Umschaltung des magnetischen Kühlers das zweite Ventil (60) derart ansteuert, dass das Wärmeträgermedium zu dem/der einen oder zu dem/der anderen der Bereiche oder Einheiten (30, 32) des magnetischen Kühlers geführt wird.

6. Kühl- und/oder Gefriergerät nach Anspruch 1, **dadurch gekennzeichnet, dass** die Zeitspanne konstant oder durch den Nutzer einstellbar ist oder dass die Zeitspanne von einem oder mehreren Betriebsparametern des Gerätes abhängt.

7. Kühl- und/oder Gefriergerät nach einem der vorhergehenden Ansprüche, **dadurch gekennzeichnet, dass** eine Steuereinheit vorgesehen ist, die derart ausgeführt ist, dass sie in Abhängigkeit der erforderlichen Kühlleistung die Anzahl der von Wärmeträgermedium durchströmten kalten Wärmetauscher (20) festlegt.

## Claims

1. Refrigeration and/or freezer device, having one or multiple spaces for the reception of refrigerated and/or frozen products as well as at least one refrigeration unit, which includes one or multiple magnetic coolers, wherein the refrigeration unit comprises at least two cold heat exchangers (20) for the cooling of the space(s), **characterized in that** at least two of the cold heat exchangers (20) are arranged in parallel in one circuit, **in that** a valve (70) is arranged upstream or downstream, in the flow direction of the heat transfer medium, of the at least two cold heat exchangers (20), and **in that** a control unit is provided, which controls the valve (70) in such a way that always at least one of the cold heat exchangers (20) is flown through by the cooled heat transfer medium, and **in that** a control unit is provided, which switches the refrigeration unit in such a way that one of the cold heat exchangers (20), for the defrosting thereof, is not flown through by the heat transfer medium for a certain time period.

2. Refrigeration and/or freezer device according to claim 1, **characterized in that** at least two of the cold heat exchangers (20) are arranged in parallel, **in that** one or multiple valves (70) are arranged upstream or downstream, in the flow direction of the heat transfer medium, of the at least two cold heat exchangers (20), and **in that** a control unit is provided, which controls the valve(s) (70) in such a way that the number of cold heat exchangers (20) flown-through by the heat transfer medium depends upon one or multiple operating parameters.

3. Refrigeration and/or freezer device according to one of the preceding claims, **characterized in that** at least two of the cold heat exchangers (20) are arranged in series, **in that** bypass lines are provided, which can be connected or blocked via valves (50, 60), respectively, and which each bypass one or multiple cold heat exchangers, and **in that** a control unit is provided, which controls the valves (50, 60) in such a way that always at least one of the heat exchangers (20) is flown through by the heat transfer medium.

4. Refrigeration and/or freezer device according to one of the preceding claims, **characterized in that** at least two of the cold heat exchangers (20) are arranged in series, **in that** bypass lines are provided, which can be connected or blocked via valves (50, 60), respectively, and which each bypass one or multiple of the cold heat exchangers (20), and **in that** a control unit is provided, which controls the valves (50, 60) in such a way that the number of cold heat exchangers (20) flown-through by the heat transfer medium depends upon one or multiple operating parameter(s).

5. Refrigeration and/or freezer device according to one of the preceding claims, **characterized in that** a second valve (60) is arranged downstream in the flow direction of the cold heat exchangers (20), and **in that** a control unit is provided which controls the second valve (60) clocked with the switching of the magnetic cooler in such a way that the heat transfer medium is guided to one or the other of the regions or units (30, 32) of the magnetic cooler.

6. Refrigeration and/or freezer device according to claim 1, **characterized in that** the time span is constant or can be adjusted by the user, or **in that** the time span depends on one or multiple operating parameters of the device.

7. Refrigeration and/or freezer device according to one of the preceding claims, **characterized in that** a control unit is provided, which is configured in such a way that it sets the number of cold heat exchangers (20) flown through by the heat transfer medium depending on the required cooling power.

## Revendications

1. Appareil de réfrigération et/ou de congélation comprenant un ou plusieurs compartiments pour le logement de produits à réfrigérer et/ou à congeler, ainsi qu'au moins une unité de réfrigération qui comprend un ou plusieurs refroidisseurs magnétiques, l'unité de réfrigération présentant au moins deux échangeurs de chaleur (20) froids pour le refroidissement du ou des compartiments, **caractérisé en ce qu'**au moins deux des échangeurs de chaleur (20) froids sont disposés en parallèle dans un circuit, **en ce qu'**une soupape (70) est disposée en direction d'écoulement du fluide caloporteur, en amont ou en aval des au moins deux échangeurs de chaleur (20) froids, et **en ce qu'**une unité de commande est ménagée, laquelle commande la soupape (70) de manière à ce que toujours au moins un des échangeurs de chaleur (20) froids soit traversé par le fluide caloporteur refroidi, et **en ce qu'**une unité de commande est prévue, laquelle connecte l'unité de réfrigération de manière à ce qu'un des échangeurs de chaleur (20) froids, dans le but de son dégivrage, ne soit pas traversé par le fluide caloporteur pendant une période de temps.

2. Appareil de réfrigération et/ou de congélation selon la revendication 1, **caractérisé en ce qu'**au moins deux des échangeurs de chaleur (20) froids sont disposés en parallèle, **en ce qu'**une ou plusieurs soupape(s) (70) sont disposées en direction d'écoulement du fluide caloporteur, en amont ou en aval des au moins deux échangeurs de chaleur (20) froids, et **en ce qu'**une unité de commande est prévue, laquelle commande la ou les soupape(s) (70) de manière à ce que le nombre d'échangeurs de chaleur (20) froids, lesquels sont traversés par le fluide caloporteur, dépend d'un ou de plusieurs paramètres d'exploitation.

3. Appareil de réfrigération et/ou de congélation selon l'une quelconque des revendications précédentes, **caractérisé en ce qu'**au moins deux des échangeurs de chaleur (20) froids sont disposés en série, **en ce que** des conduites de dérivation sont ménagées, lesquelles peuvent être connectées ou bloquées respectivement par l'intermédiaire de soupapes (50, 60), et lesquelles contournent respectivement un ou plusieurs des échangeurs de chaleur froids, et **en ce qu'**une unité de commande est prévue, laquelle commande les soupapes (50, 60) de manière à ce que toujours au moins un des échangeurs de chaleur (20) froids soit traversé par le fluide caloporteur.

4. Appareil de réfrigération et/ou de congélation selon l'une quelconque des revendications précédentes, **caractérisé en ce qu'**au moins deux des échangeurs de chaleur (20) froids sont disposés en série, **en ce que** des conduites de dérivation sont prévues, lesquelles peuvent être connectées ou bloquées respectivement par l'intermédiaire de soupapes (50, 60), et lesquelles contournent respectivement un ou plusieurs des échangeurs de chaleur froids, et **en ce qu'**une unité de commande est prévue, laquelle commande les soupapes (50, 60) de manière à ce que le nombre d'échangeurs de chaleur (20) froids, lesquels sont traversés par le fluide caloporteur, dépende d'un ou de plusieurs paramètres d'exploitation.

5. Appareil de réfrigération et/ou de congélation selon l'une quelconque des revendications précédentes, **caractérisé en ce qu'**une deuxième soupape (60) est disposée en direction d'écoulement du fluide caloporteur, en aval des échangeurs de chaleur (20) froids, et **en ce qu'**une unité de commande est prévue, laquelle commande la deuxième soupape (60) à la cadence de commutation du refroidisseur magnétique, de manière à ce que le fluide caloporteur soit guidé vers la/l'une ou la/les autres des parties ou unités (30, 32) du refroidisseur magnétique.

6. Appareil de réfrigération et/ou de congélation selon la revendication 1, **caractérisé en ce que** la période de temps est constante ou est réglable par l'utilisateur, ou **en ce que** la période de temps dépend d'un ou de plusieurs paramètres d'exploitation de l'appareil.

7. Appareil de réfrigération et/ou de congélation selon l'une quelconque des revendications précédentes, **caractérisé en ce qu'**une unité de commande est prévue, laquelle est réalisée de manière à ce qu'elle détermine le nombre d'échangeurs de chaleur (20) froids traversés par le fluide caloporteur.
